# EUROPEAN PATENT APPLICATION

(11) **EP 4 087 192 A1**
(43) Date of publication of application: **09.11.2022**
(21) Application number: 21172498.4
(22) Date of filing: 06.05.2021
(51) Int. Cl.: H04L 12/24, H04L 12/26, G06N 20/00, H04W 24/10

(54) **COMMUNICATION NETWORK ARRANGEMENT AND METHOD FOR PROVIDING A MACHINE LEARNING MODEL FOR PERFORMING COMMUNICATION NETWORK ANALYTICS**

(71) Applicant: NTT DoCoMo, Inc., Tokyo 100-6150 (JP)
(72) Inventor: SAMA, Malla Reddy, 80687 Munich (DE); THAKOLSRI, Srisakul, 80687 Munich (DE)
(74) Representative: Viering, Jentschura & Partner mbB Patent- und Rechtsanwälte

(57) **Abstract**

According to an embodiment, a communication network arrangement of a mobile communication network is described comprising a machine learning model training component configured to train a plurality of machine learning models for deriving network analytics information and a network analytics component configured to request a machine learning model from the machine learning model training component, wherein the network analytics component specifies a parameter of a network side target of network analytics for which it requests the machine learning model, wherein the machine learning model training component is configured to select a machine learning model from the plurality of machine learning models which has been trained for a network side target of network analytics according to the parameter specified in the request and to provide the determined machine learning model to the network analytics component.

## Description

The present disclosure relates to communication network arrangements and methods for providing a machine learning model for performing communication network analytics.

In a communication network such as a 5G mobile communication network it is important to ensure that a certain service quality can be maintained. For this, network statistical analysis and prediction information which may be generated from information like load, resource usage, available components, state of components etc. may be monitored to be able to take measures, e.g. when overload is imminent, to avoid a drop of service quality, etc. In a communication network having a network slice architecture, like a 5G mobile communication system, this relates in particular to monitoring of network analysis and prediction information (also referred to as network analytics information) for individual network slice instances since, for example, individual network slice instances may become overloaded. Accordingly, efficient and reliable approaches to provide network analysis and/or prediction information are desirable.

According to an embodiment, a communication network arrangement of a mobile communication network is provided, including a machine learning model training component configured to train a plurality of machine learning models for deriving network analytics information (e.g. statistics and/or predictions information) and a network analytics component configured to request a machine learning model from the machine learning model training component, wherein the network analytics component specifies a parameter of a network side target of network analytics for which it requests the machine learning model, wherein the machine learning model training component is configured to select a machine learning model from the plurality of machine learning models which has been trained for a target of network analytics according to the parameter specified in the request and to provide the determined machine learning model to the network analytics component.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a radio communication system, for example configured according to 5G (Fifth Generation) as specified by 3GPP (Third Generation Partnership Project).
Figure 2 shows a network slice.
Figure 3 shows an NWDAF AnLF (Network Data Analytics Function Analytics Logical Function) and an NWDAF MTLF (Network Data Analytics Function Model Training Logical Function).
Figure 4 shows a flow diagram illustrating an ML (machine learning) model provisioning service operation.
Figure 5 shows a flow diagram illustrating an ML model request service operation.
Figure 6 illustrates a first example and a second example for ML model selection based on UE (User Equipment) group ID.
Figure 7 illustrates a first example and a second example for ML model selection based on slice ID.
Figure 8 shows a flow diagram for an NF (Network Function) profile registration procedure.
Figure 9 illustrates the discovery of an NWDAF(MTLF) by an NWDAF(AnLF) by means of an DCCF (Data Collection Coordination Function).
Figure 10 shows the provision of a machine learning model from an NWDAF(MTLF) to an NWDAF(AnLF) via an ADRF (Analytics Data Repository Function).
Figure 11 shows a communication network arrangement of a mobile communication network according to an embodiment.
Figure 12 shows a flow diagram illustrating a method for performing communication network analytics.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a communication network arrangement of a mobile communication network as described above.
Example 2 is the communication network arrangement according to Example 1, wherein the network side target of network analytics is a resource of the mobile communication network or a function provided by the mobile communication network.
Example 3 is the communication network arrangement according to Example 1 or 2, wherein the network side target is a sub-network of the mobile communication network and/or an application and/or communication service provided by the mobile communication network.
Example 4 is the communication network arrangement according to any one of Example 1 to 3, wherein the network analytics component is configured to perform network analytics using the provided machine learning model.
Example 5 is the communication network arrangement according to any one of Example 1 to 4, wherein the machine learning model training component is configured to provide the selected machine learning model to the network analytics component by providing an identifier of a storage location of the machine learning model.
Example 6 is the communication network arrangement according to Example 5, wherein the machine learning model training component is configured to provide the identifier of an Analytics Data Repository Function (ADRF) as a storage location of the machine learning model.
Example 7 is the communication network arrangement according to any one of Example 1 to 6, wherein the parameter specifies a characteristic of the network side target of network analytics and wherein the machine learning model training component is configured to select the machine learning model by selecting, from the plurality of machine learning models, a machine learning model which has been trained for a network side target of network analytics having the specified characteristic.
Example 8 is the communication network arrangement according to any one of Example 1 to 7, wherein the parameter is an identification of sub-network of the mobile communication network, an identification of a type of a sub-network of the mobile communication network, or an identification of a sub-network of the mobile communication network.
Example 9 is the communication network arrangement according to Example 8, wherein the sub-network is a radio access network, a network slice, a radio access network slice, a core network slice, a non-public network or , a Public Land Mobile Network,
Example 10 is the communication network arrangement according to any one of Example 1 to 9, wherein the network analytics information is
   information about the communication behaviour and/or mobility of one or more mobile terminals, when the one or more mobile terminals use the network side target of network analytics,
   an observed communication quality when the one or more mobile terminals use the network side target of network analytics or
      a performance of the network side target of network analytics or
      a combination thereof.
Example 11 is the communication network arrangement according to any one of Examples 1 to 10, including a control plane component, in particular an Access and Mobility Management Function or a Session Management Function, which implements the network analytics component.
Example 12 is the communication network arrangement according to any one of Examples 1 to 11, including a intermediate component wherein the network analytics component is configured to request the machine learning model via the intermediate component and wherein the machine learning model training component is configured to provide the determined machine learning model to the network analytics component via the intermediate component.
Example 13 is the communication network arrangement according to any one of Example 1 to 12, wherein the network analytics component is an Network Data Analytics Function- Analytics Logical Function
Example 14 is the communication network arrangement according to any one of Example 1 to 13, wherein the network analytics component is configured to receive a request to perform network analytics from a control plane component of the mobile communication network specifying the parameter of the network side target of network analytics.
Example 15 is the communication network arrangement according to any one of Example 1 to 14, wherein the network analytics component specifies, in addition to the parameter of the network side target of network analytics for which it requests the machine learning model, specifies an analytics identification describing a type of network analytics information which should be generated by the requested machine learning model, or one or more mobile terminals for which the network analytics information which should be generated by the requested machine learning model or both and the machine learning model training component is configured to select the machine learning model by selecting, from the plurality of machine learning models, a machine learning model which has been trained to provide the described type of network analytics information, or has been trained for performing network analytics for the one or more mobile terminals or both.
Example 16 is the communication network arrangement according to any one of Example 1 to 15, wherein the machine learning model training component is configured to train a machine learning model for a plurality of values of the parameter of the network side target of network analytics.
Example 17 is a method for providing a machine learning model for performing communication network analytics including training a plurality of machine learning models for deriving network analytics information, receiving a request for a machine learning model including the specification of a parameter of a network side target of network analytics for which the machine learning model is requested and providing a machine learning model from among the plurality of machine learning models which has been trained for a network side target of network analytics according to the specified parameter.

It should be noted that one or more of the features of any of the examples above may be combined with any one of the other examples. In particular, the Examples described in context of the device are analogously valid for the method.

According to further embodiments, a computer program and a computer readable medium including instructions, which, when executed by a computer, make the computer perform the method of any one of the above Examples are provided.

In the following, various examples will be described in more detail.

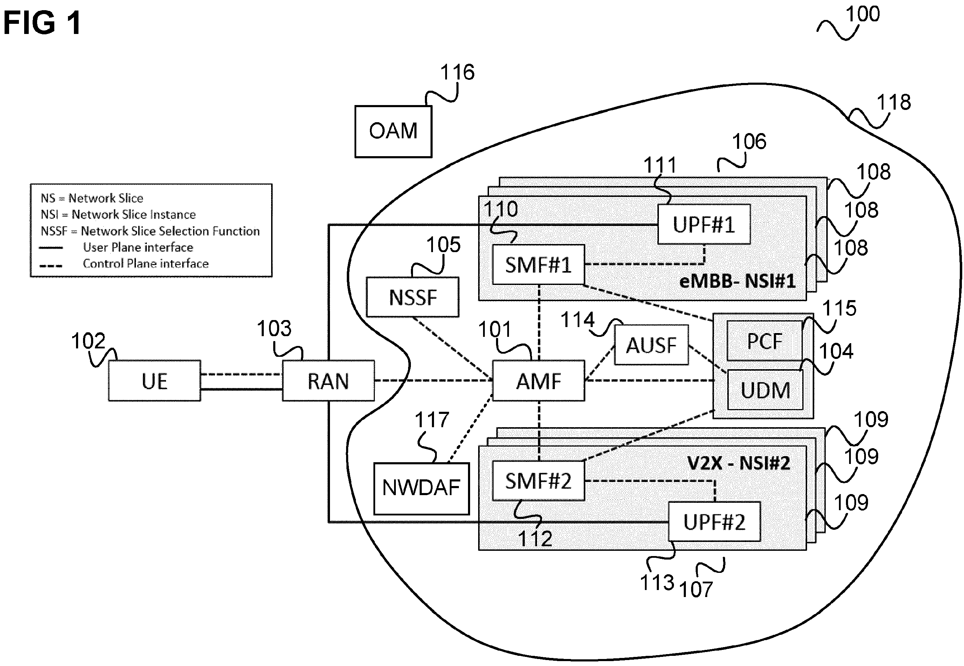

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), a nano equipment (NE), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple core network slices 106, 107 and for each core network slice 106, 107, the operator (also referred to MNO for Mobile Network Operator) may create multiple core network slice instances 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 118 form the network side of the mobile radio communication system, or, in other words, form the mobile radio communication network. The mobile radio communication network and the mobile terminals accessing the mobile radio communication network form, together, the mobile radio communication system.

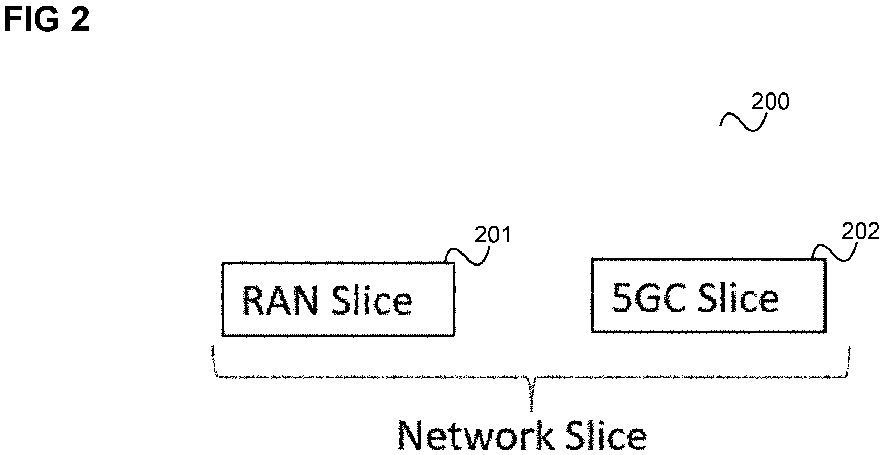

Like the core network 118, the RAN 103 may also be sliced, i.e. include multiple RAN slices. A RAN slice and a core network slice 106, 107 may be grouped to form a network slice as illustrated in figure 2.

Figure 2 shows a network slice 200.

A network slice 200 can be seen as a logical network that provides specific network capabilities and network characteristics.

The network slice 200 includes a RAN slice 201 and a core network (e.g. 5GC) slice 202.

An instance of a network slice 200, i.e. a network slice instance which includes a RAN slice instance and a core network slice instance, is defined within a PLMN and includes Core Network Control Plane and User Plane Network Functions, RAN components (e.g. NG-RAN components), in particular base stations. In case of roaming these components may at least partially be of a visited PLMN (VPLMN).

In the following, "network slice" (or just "slice") generally refers to a core network slice but may also include a RAN slice.

An S-NSSAI (Single Network Slice Selection Assistance information) identifies a network slice and consists of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

A network slice instance is identified by an NSI (also referred to as NSI ID).

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration in order to establish a PDU session to the requested network slice.

The mobile radio communication system 100 may further include an OAM (Operation, Administration and Maintenance) function (or entity) 116, e.g. implemented by one or more OAM servers which is connected to the RAN 103 and the core network 118 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

The core network 118 may further include a Network Data Analytics Function (NWDAF) 117. The NWDAF is responsible for providing network analysis and/or prediction information upon request from network functions. For example, a network function may request specific analysis information on the load level of a particular network slice instance. Alternatively, the network function can use the subscribe service to ensure that it is notified by the NWDAF if the load level of a network slice instance changes or reaches a specific threshold. The NWDAF 117 may have an interface to various network functions on the mobile communication network side, e.g. to the AMF 101, the SMFs 110, 112 and the PCF 115. For simplicity, only the interface between the NWDAF 117 and the AMF 101 is depicted.

For example, NWDAF analytics should allow monitoring the number of UEs registered in a network slice instance and their Observed Service Experience. In addition to OAM performing SLA (service level agreement) assurance, 5GC NFs may take actions based on NWDAF slice QoE analytics to prevent further service experience degradation in the network slice instance.

The NSSF 105 or AMF 101 may for example determine when a load distribution decision is required to address an issue identified by processing the analytics result (i.e. network analysis and/or prediction information) provided by the NWDAF 117. For example, when a network slice instance is detected or forecast to experience service experience degradation, new UE registrations or PDU sessions may not be assigned to that network slice instance anymore by triggering a network slice load distribution mechanism. The NSSF 105, AMF 101 and/or OAM 116, for example, may also simultaneously subscribe to both slice service experience and slice load analytics from the NWDAF 117. One or multiple subscriptions to one or multiple S-NSSAI(s) and NSI(s) are possible.

The NWDAF 117 provides slice load level information to an NF on a Network slice instance level. The NWDAF notifies slice specific network status analytics information (also referred to as network analysis and/or prediction information) to the NFs that are subscribed to it. For example, as network analysis and/or prediction information, the NWDAF 117 reports when the load level of the Network slice instance, indicated by the S-NSSAI and the associated NSI (if applicable) in the Analytics Filter, crosses the threshold provided in the analytics subscription; if no threshold is provided in the subscription, the reporting (Notify operation) is assumed to be periodic.

To generate the network analysis and/or prediction information, NWDAF 117 collects input data required (e.g. to derive slice service experience analytics), i.e. information for analysis of the state of the network slice instance. The NWDAF 117 may obtain such kind of information by subscribing to network functions to be informed accordingly.

According to 3GPP Release 17 (Rel-17) the NWDAF 117 is decomposed into two functions.

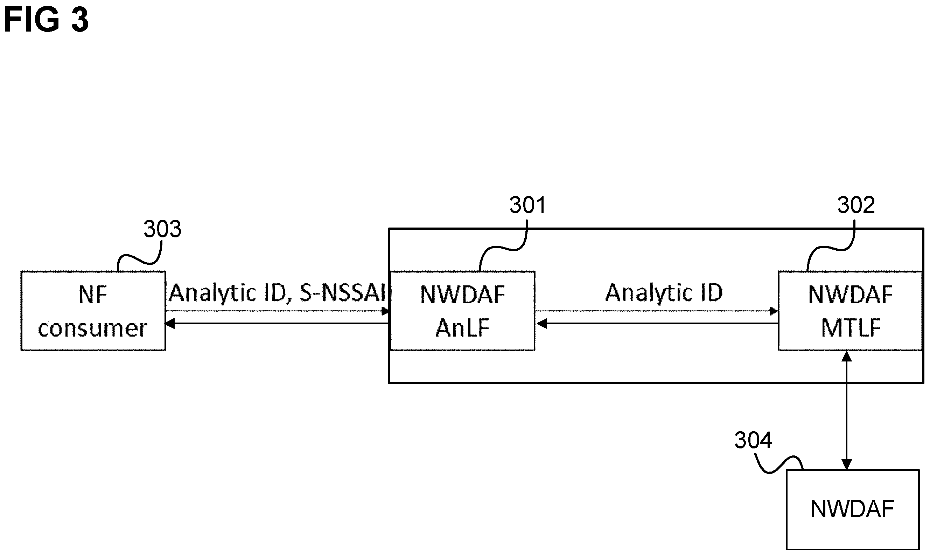

Figure 3 shows an NWDAF AnLF (Analytics Logical Function) 301 and an NWDAF MTLF (Model Training Logical Function) 302.

An NWDAF 301 containing the Analytics logical function is denoted as NWDAF(AnLF) (or NWDAF-AnLF) and can perform inference, derive analytics information and expose analytics service i.e. Nnwdaf_AnalyticsSubscription or Nnwdaf_AnalyticsInfo.

An NWDAF 302 containing the Model Training logical function is denoted as NWDAF(MTLF) (or NWDAF-MTLF), trains machine learning (ML) models and exposes new training services (e.g. providing trained model).

The NWDAF(AnLF) 301 provides an analytics service. It may be contacted by an NF (acting as service consumer) 303 (e.g. an AMF or SMF) to be provided with analytics information.

Input request parameters to the NWDAF(AnLF) 301 by the NF 303 are, e.g. an Analytic ID and an S-NSSAI. The output from the NWDAF(AnLF) 301 are for example statistics and/or prediction (referred to as network analytics information herein) for an Analytic ID.

Examples of Analytics IDs are UE communication, UE mobility, UE behaviour, User data congestion and Network performance, etc. It should be noted that these Analytics IDs are not slice specific.

The NWDAF(MTLF) 302 provides an ML model service (Model Training Exposure). It may be contacted by another NWDAF (acting as service consumer) 304 to be provided with a trained machine learning model to perform analytics.

Table 1 lists ML model related service operations.

| **Service Name** | **Service Operations** | **Operation Semantics** |
|---|---|---|
| Nnwdaf_MLModelProvision | Subscribe | Subscribe / Notify |
| | Unsubscribe | |
| | Notify | |
| Nnwdaf MLModelInfo | Request | Request / Response |

The Nnwdaf MLModelProvision service and the Nnwdaf_MLModelInfo service are provided by an NWDAF(MTLF) 301 and consumed by an NWDAF 304 (which is usually an NWDAF(AnLF)).

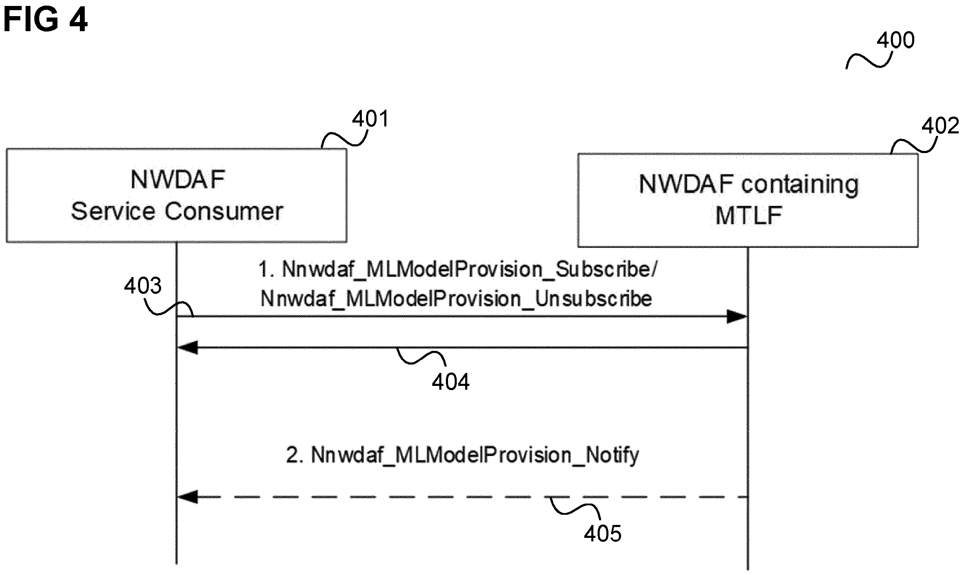

Figure 4 shows a flow diagram 400 illustrating an ML model provisioning service operation.

An NWDAF service consumer 401 (e.g. corresponding to the NWDAF 304 or NF 301) and an NWDAF(MTLF) 402 (e.g. corresponding to NWDAF(MTLF) 302) are involved in the flow.

The purpose of the flow of figure 4 is for the NWDAF service consumer 401 to subscribe and/or to be notified when ML model information on the related analytics becomes available.

In 403, the NWDAF service consumer 401 subscribes to the model provisioning service (it may later similarly unsubscriber). The NWDAF(MTL) 402 acknowledges in 404.

When subscribing, the NWDAF service consumer 401 may provide the following input for the NWDAF(MTLF) 402:
- A list of Analytics ID(s): identifies the analytics for which the ML model is to be used.
- Analytics Filter Information: indicates the conditions to be fulfilled for reporting Analytics Information. This enables to select which ML model for the analytics is requested.
- Target of Analytics Reporting: indicates the object(s) for which ML model for the analytics is requested, entities such as specific UEs, a group of UE(s) or any UE (i.e. all UEs).

When the NWDAF service consumer 401 has subscribed to the model provisioning service, the NWDAF(MTLF) provides as output notification correlation information and ML model information (e.g. ML model file address(es) for the Analytics ID(s)) to the NWDAF service consumer 401.

It should be noted that an NWDAF 118 can provide the an analytics service or the ML model service or both services (i.e. an NWDAF 118 may be both an and an NWDAF(AnLF) 301 and a NWDAF(MTLF) 302).

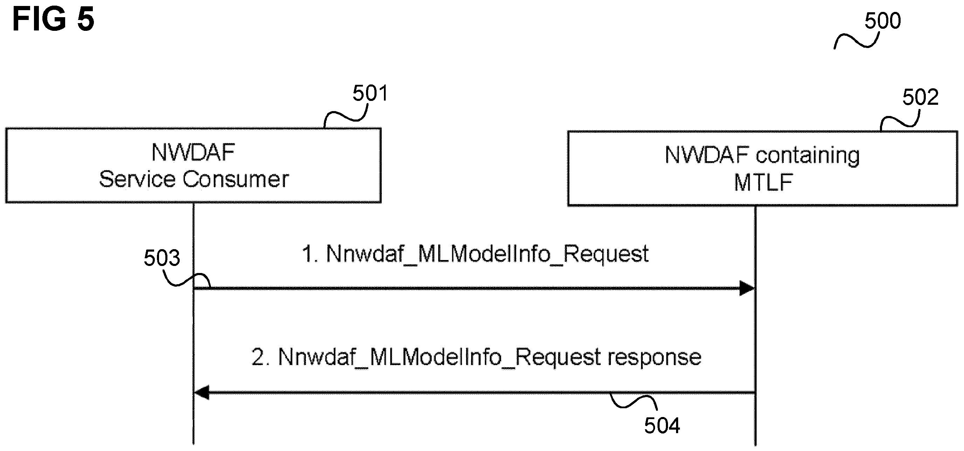

Figure 5 shows a flow diagram 500 illustrating an ML model request service operation.

An NWDAF service consumer 501 (e.g. corresponding to the NWDAF 304) and an NWDAF(MTLF) 502 (e.g. corresponding to NWDAF(MTLF) 302) are involved in the flow.

The purpose of the flow of figure 5 is that the NWDAF service consumer 501 is provided with (a set of) ML model(s) information associated with Analytics ID, so that the NWDAF service consumer 501 can derive analytics.

In 503, the NWDAF service consumer 501 sends a request messsage to the NWDAF(MTLF) 502 having similar input as in the flow of figure 4 (in particular a one or more Analytic IDs) to request NWDAF ML model information. This input optionally includes Analytics Filter information to indicate the conditions to be fulfilled for reporting Analytics Information, and Target of Analytics Reporting to indicate the object(s) for which ML model for the analytics is requested, entities such as specific UEs, a group of UE(s) or any UE (i.e. all UEs).

In 504, the NWDAF(MTLF) 502 responds with a similar output as in the flow of figure 4, i.e., one or more tuples (Analytics ID, address (e.g. URL (Uniform Ressource Locator) or FQDN (Fully-Qualified Domain Name)) of Model file).

The NWDAF(MTLF) 302 may determine the machine learning model to be provided for the analytics depending on whether the ML model should be provided for analysis of specific UEs or a group of UE(s) or any UE (i.e. all UEs).

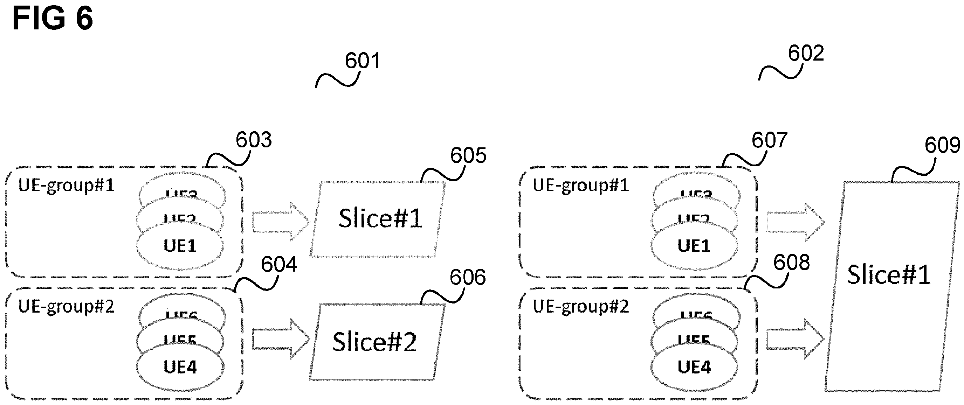

Figure 6 illustrates a first example 601 and a second example 602 for ML model selection based on UE group ID.

In the first use case there is a respective group 603, 604 for each of two network slices 605, 606.

The NWDAF(MTLF) 302 for example selects a ML model when being provided with an Analytics ID and an ID of the UE group.

In the second use case 602 there is are two groups of UEs 607, 608 for a single network slice 609.

Again, the NWDAF(MTLF) 302 for example selects an ML model when being provided with an Analytics ID and an ID of the UE group (assuming, for example, that the IDs of the UE groups are unique over the PLMN).

According to various embodiments, the NWDAF(MTLF) 302 determines the machine learning model to be provided for the analytics depending on the part (e.g. sub-network) of the communication network for which the analytics should be performed, i.e. depending on parameters like
- S-NSSAI and/or NSI (i.e. slice ID)
- Slice type (e.g. indicated by S-NSSAI) and/or DNN
- NPN (Non-public network) type (e.g. SNPN or CAG)
- NPN ID type (e.g. SNPN ID or CAG ID)
- PLMN ID
- Access/RAT type (3GPP (e.g. LTE, NR) vs non-3GPP (WiFi, fixed) access) CN type (e.g. 5GC, EPC, 6GC)
- Application/service ID/type (e.g. VoIP, URLLC)
- UE location information (e.g. granularity of location information can be tracking area (TA) level or cell level or geographic location and civic location)
- Area of interest (e.g. list of tracking area list (TAI))
for which analytics should be performed with the machine learning model. The NWDAF(MTLF) 302 may use one or more of these above parameters, possibly in combination to determine the ML model.

In the following, examples will be given for a slice-specific ML model selection. For example, a third party (to which a certain network slice is assigned) can bring its own ML model based on its business needs.

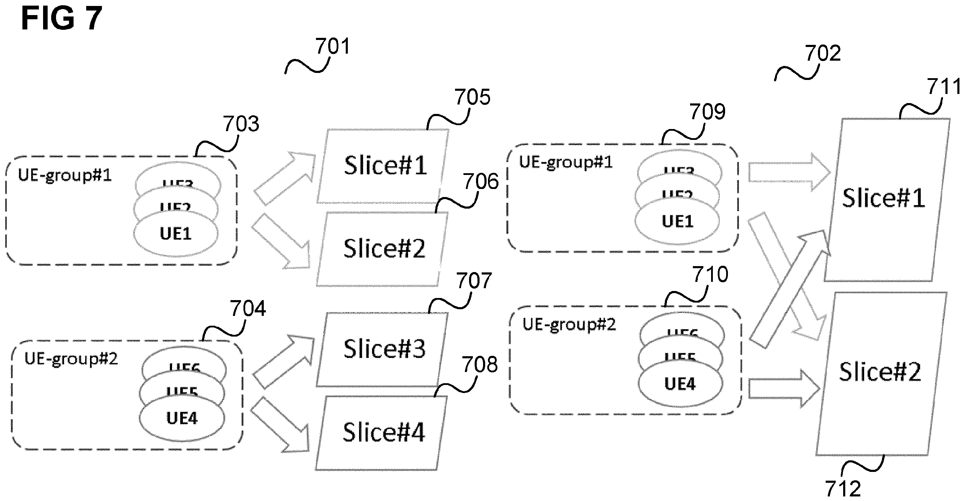

Figure 7 illustrates a first example 701 and a second example 702 for ML model selection based on slice ID.

In the first example 701 there are two UE groups 703, 704. Each UE group 703, 704 has its own dedicated set of network slices: a part of the UEs of the first UE group 703 is served by a first network slice 705 and another part of the UEs of the first UE group 703 is served by a second network slice 706. A part of the UEs of the second UE group 704 is served by a third network slice 707 and another part of the UEs of the second UE group 704 is served by a fourth network slice 708.

The NWDAF(MTLF) 302 for example selects a ML model when being provided an Analytics ID, an ID of the UE group and an S-NSSAI and/or NSI, i.e. in particular in a slice-specific manner.

An exemplary use case for the first example 701 is for example that a first car manufacturer wants to have two network slices (eMBB#1 and V2X#1). Each network slice is dedicated only to UEs (group of UEs) of the first car manufacturer (e.g. UEs built into cars of the first car manufacturer). Each network slice for the first car manufacturer has different ML models for deriving analytics. Similarly, a second car manufacturer also wants to have two network slices (eMBB#2 and V2X#2). Each network slice is dedicated only to UEs (a group of UEs) of the second car manufacturer (e.g. UEs built into cars of the second car manufacturer). Each network slice for the second car manufacturer has different ML models for deriving analytics.

In the second example 702 there are two UE groups 709, 710. In this example, multiple slices are shared across multiple groups of UEs: A part of the UEs of the first UE group 709 is served by a first network slice 711 and another part of the UEs of the first UE group 709 is served by a second network slice 712. A part of the UEs of the second UE group 710 is served by the first network slice 711 and another part of the UEs of the second UE group 710 is served by the second network slice 712.

The NWDAF(MTLF) 302 for example selects a ML model when being provided an Analytics ID, an ID of the UE group and an S-NSSAI, i.e. in particular in a slice-specific manner.

An exemplary use case for the second example 702 is for example first car manufacturer wants to have two network slices (eMBB and V2X) and a second car manufacturer also wants to have two network slices (eMBB and V2X) but that they accept that the two network slices are shared among their UEs. The car manufacturers may have different ML models for deriving analytics for the two slices (and a car manufacturer may have different ML models than the other).

It should be noted that in the examples 701, 702, where the ML model is slice-specific, the NWDAF(MTLF) 302 may, in contrast to the examples 601, 602 of figure 6, not select the correct ML model using (only) the ID of the UE groups because there is no one-to-one relationship between slices and UE groups. This means that while the selection in the example of figure 6 may also be slice-specific by only communicating the UE group ID (assuming that the ML model is UE group specific), this is not the case in the examples of figure 7.

Accordingly, there may be more input parameters needed for selecting the right ML model than the UE group ID.

Therefore, for the example of a slice-specific selection of an ML model, the NWDAF(AnLF) 301 forwards the S-NSSAI which the NF consumer 303 sends to the NWDAF(AnLF) 301 to the NWDAF(MTLF) 302 such that the NWDAF(MTLF) 302 knows which (S-NSSAI specific) ML model to provide.

For example, the NWDAF service consumer 401 includes the S-NSSAI of the network slice for which it wants to be provided with an ML model into the subscribe message of 403 (e.g. in addition to an Analytics ID).

Similarly, the NWDAF service consumer 501 includes the S-NSSAI of the network slice for which it wants to be provided with an ML model into the request message of 503 (e.g. in addition to an Analytics ID).

When an NWDAF(MTLF) 302 supports ML model provision for a certain sub-network type or sub-network, this capability may be included in its NF profile which is registered by itself or by an OAM 116 in an NRF (upon an NF profile registration request).

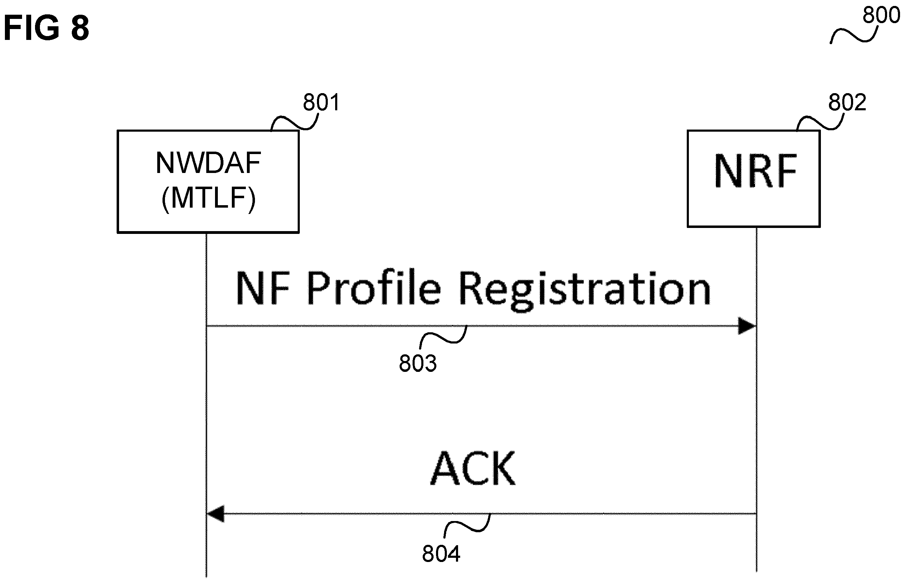

Figure 8 shows a flow diagram 800 for an NF profile registration procedure.

In 803, an NWDAF(MTLF) or an OAM 801 sends an NF profile registration request to an NRF 801 for requesting registration of the NWDAF(MTLF)'s NF profile.

The NRF 802 registers the NWDAF(MTLF)'s NF profile and acknowledges in 804.

For the example of a slice-specific ML model selection, the NWDAF(MTLF)'s NF profile may include a slice parameter, e.g. the NWDAF(MTLF) NF profile includes the information (for a target report/filter) that MTLF supports ML model for Slice#x.

For discovery of the NWDAF(MTLF), an NF consumer may include a "slice identification" as a parameter to discovery the NWDAF(MTLF) instance. The NRF 802 provides one or more candidate MTLF instances which supports the requested slice.

Similarly, this may be done for slice type instead of slice ID, i.e. the NWDAF(MTLF) NF profile indicates that the NWDAF(MTLF) supports an ML model for slice type x and for discovery, an NF consumer may include a "slice type" as a parameter

Similarly, for selection based on another sub-network identification or type, e.g. NPN type (e.g. SNPN (Stand-Alone NPN) type or CAG (Closed Access Group) type), the NWDAF(MTLF)'s NF profile may include an NPN or NPN type parameter, e.g. the NWDAF(MTLF) NF profile includes the information (for a target report/filter) that MTLF supports ML model for NPN#x or NPN type x.

For discovery of the NWDAF(MTLF), an NF consumer may include an "NPN type" or "NPN idenfication", respectively, as a parameter to discovery the NWDAF(MTLF) instance. The NRF 802 provides one or more candidate MTLF instances which supports requested NPN or NPN type.

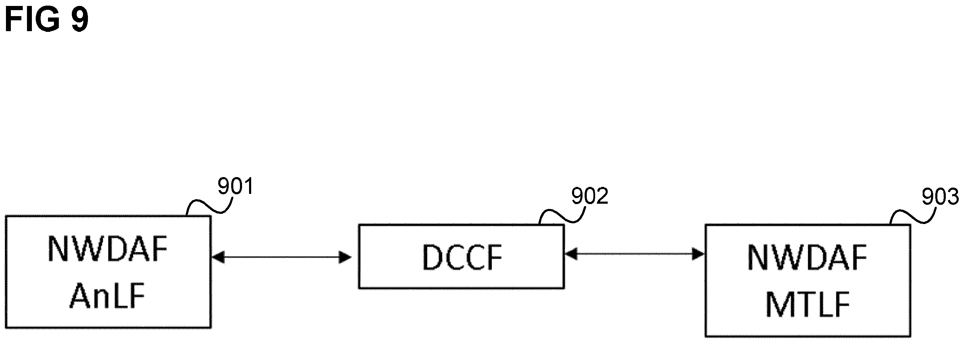

Depending on the input parameters (in particular sub-network ID or sub-network type) the NWDAF(MTL) selects and returns a ML model to the requesting entity. The requesting entity may be an NWDAF(AnLF) 304 as described with reference to figure 3. Figure 9 illustrates the discovery of an NWDAF(MTLF) 903 by an NWDAF(AnLF) 901 by means of an DCCF (Data Collection Coordination Function) or, in general, by means of an intermediate (e.g. like a proxy or coordination function) component.

The NWDAF(AnLF) 901 may use the Data Collection Coordination Function (DCCF) 902 902 to obtain a suitable ML model. The DCCF 902 performs discovery of the NWDAF(MTLF) 903 based on an input request from the NWDAF(AnLF) and requests the ML model from the NWDAF(MTLF).

Based on the request, the NWDAF(MTLF) 903 provides the model information to the DCCF 902 which forwards it to the NWDAF(AnLF) 901. In addition, the DCCF 902 may stores the ML model information in its memory so that in future if any NWDAF(AnLF) requests a similar model it can provide the model information without consulting again with the NWDAF(MTLF).

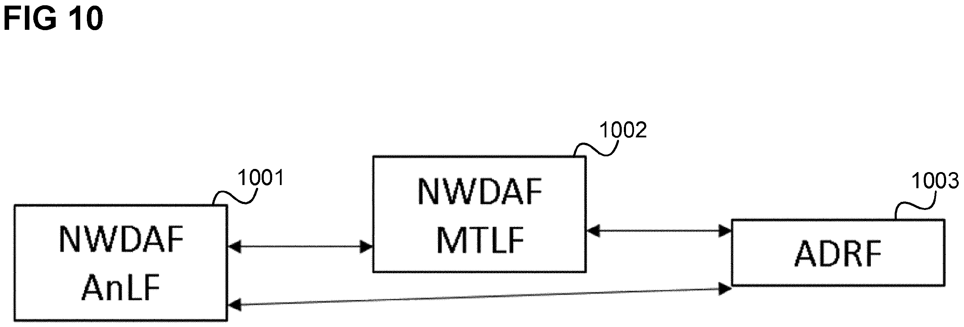

Figure 10 shows the provision of a machine learning model (i.e. ML model information) from an NWDAF(MTLF) 1002 to an NWDAF(AnLF) 1001 via an ADRF (Analytics Data Repository Function) 1003.

The NWDAF(MTLF) 1002 may use the Analytics Data Repository Function (ADRF) 1003 to store ML models. When a receiving a request for an ML model from the NWDAF(AnLF) 1001, the NWDAF(MTLF) 1002 provides information about the model and/or ADRF information where the ML model is stored 1003 to the NWDAF(AnLF) 1001, i.e. in general the consumer.

It also possible that the consumer (NWDAF(AnLF) 1001 in this example) directly communicates with the ADRF 1003 for the ML model. In this case, based on the policy and authorization of the NWDAF(AnLF) 1001, the ADRF 1003 can provide the stored model which matches the consumer request. In such a case, the ADRF 1003 and the NWDAF(MTLF) 1002 can together be seen as the component which trains and provides the machine learning model. In particular, the machine learning model training component (which trains the model) would in this case include as a storage an ADRF 1003 for storing the ML models. The ADRF 1003 may be shared for storage with other components.

The NWDAF(MTLF) may for example select a model trained specifically for the sub-network (based on the sub-network ID) or a model trained specifically for the sub-network type (based on the sub-network type).

The NWDAF(MTL) may also select a model type depending on sub-network ID and/or sub-network type and Analytics ID.

Types of ML Models are for example:
- Binary Classification Model: an ML models for binary classification problems predict a binary outcome (one of two possible classes);
- Multiclass Classification Model: an ML model for multiclass classification problems which allow to generate predictions for multiple classes;
- Regression Model: an ML model for regression problems predict a numeric value.

Training parameters for the various ML models are for example maximum model size, maximum number of passes over training data, shuffle type, regularization type and regularization amount.

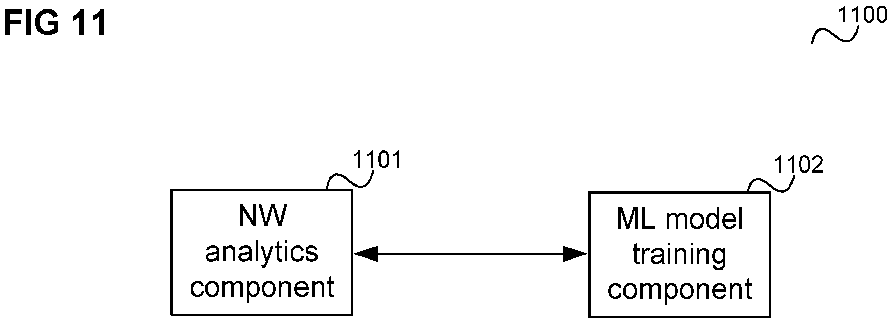

In summary, according to various embodiments, a communication network arrangement is provided as illustrated in figure 11.

Figure 11 shows a communication network arrangement 1100 of a mobile communication network according to an embodiment.

The communication network arrangement 1100 includes a machine learning model training component 1102 configured to train a plurality of machine learning models for deriving network analytics information.

The communication network arrangement 1100 further includes a network analytics component 1101 configured to request a machine learning model from the machine learning model training component 1102, wherein the network analytics component specifies (for the request, e.g. in a corresponding request message) a parameter of a network side target of network analytics for which it requests the machine learning model.

The machine learning model training component 1102 is configured to select a machine learning model from the plurality of machine learning models which has been trained for a target of network analytics according to the parameter specified in the request and to provide the determined machine learning model to the network analytics component.

According to various embodiments, in other words, a providing entity for machine learning models used for performing network analytics provides models depending on a request parameter which specifies for which element of the mobile communication network (e.g. which resource or function) the network analytics should be provided. The machine learning model training component is for example configured to train a machine learning model for various values of the parameter, e.g. different sub-networks (e.g. network slices), different sub-network types, different services etc. or combinations thereof (e.g. a service provided by a certain slice).

Thus, according to various embodiments, dedicacted ML models (for performing network analytics) for a certain network slice/DNN/etc. may be trained and provided. Such a dedicated ML model may be for example developed by a third party and provided to operator of the communication network (of which the communication network arrangement is part). This allows the 3^{rd} party to provide dedicated ML model to be used for deriving Analytics ID.

In particular, a ML model may be tailored to the sub-network for which it should perform analytics. Having separate ML models for different sub-networks or types of sub-networks allows training the ML model specifically for the sub-network or type of sub-network which in turn allows increasing the accuracy of the network analytics.

One example is ML model selection in a slice-specific manner. Slicing concept an important technology in 5G and each network slice may have different characteristics and conditions for ML model/provision. A network slice can be associated to a third party. In that case the ML model selection may need to consider an SLA (Service Level Agreement) condition which may include slice-specific selection of an ML model

In these example, it is shows that network analytics component 1101 configured to request a machine learning model from the machine learning model training component 1102. It is possible that NF consumer (303 e.g. AMF 101, SMF 110) directly communicates with the machine learning model training component 1102 for ML model information. In this case, NF consumer (303 e.g. AMF 101, SMF 110) contains the network analytics component 1101 (e.g. corresponding logic) to determine the analytics based on the received ML model.

The network side target of network analytics may for example be a resource of the mobile communication network or a function provided by the mobile communication network. A resource may for example be understood as a sub-network or one or more communication sessions or connections. A function may for example be understood as a communication service or an application (i.e. the network-side part of an application such as a server application).

According to various embodiments, a communication network arrangement is provided including network function(s), model training function(s), wherein the model training function(s) contain(s) one or more trained model(s), which is/are used for the deriving network analytics, the model training function(s) select(s) the trained model(s) based on network parameter(s) and/or communication network identifier(s), the model training function(s) provide(s) the selected trained model(s) to the network function(s).

The communication network arrangement may be part of a communication network which includes multiple network slices.

The network parameter(s) is/are a Single Network Slice Selection Assistance information (S-NSSAI) and/or DNN and/or 3GPP access and/or non-3GPP access and/or application identifier(s) and/or service identifier(s) and/or UE location information and/or area of interest.

The communication network identifier(s) is/are for example a Public land mobile network identifier and/or Non-public Network identifier (NPN) e.g. Standalone NPN ID (SNPN ID) and/or Close Access Group identifier (CAG ID).

The network function(s) is/are for example a Network Data analytics Function (NWDAF) and/or Access and Mobility Management Function (AMF) and/or Session Management Function (SMF) and/or Network repository function (NRF) and/or Unified Data Management (UDM) and/or Policy control Function (PCF) and/or Data Collection Coordination Function (DCCF) and/or Analytics Data Repository Function (ADRF) and/or Application Function (AF) and/or Operations Administration and Maintenance (OAM). In other words, these are example for a control plane component sending a request for network analytics to the network analytics component (which is e.g. an NWDAF(AnLF)).

The Model training function(s) is/are for example a Model Training logical function (MTLF).

The request of the machine learning model and/or the provision of the machine learning model may go via an intermediate component like the DCCF 902 in figure 9 and/or (for the provision case) the ADRF 1003 in figure 10.

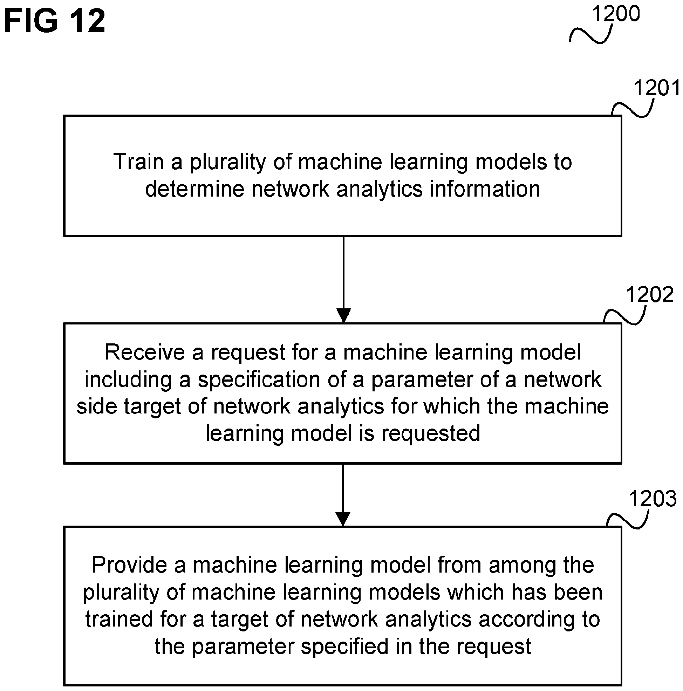

Figure 12 shows a flow diagram 1200 illustrating a method for performing communication network analytics.

In 1201, a plurality of machine learning models are trained for deriving network analytics information.

In 1202, a request for a machine learning model is received including the specification of a parameter of a network side target of network analytics for which the machine learning model is requested.

In 1203, a machine learning model from among the plurality of machine learning models is provided which has been trained for a target of network analytics according to the specified parameter.

The method may be performed and the components of the communication network arrangement may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication network arrangement of a mobile communication network comprising:
a machine learning model training component configured to train a plurality of machine learning models for deriving network analytics information;
a network analytics component configured to request a machine learning model from the machine learning model training component, wherein the network analytics component specifies a parameter of a network side target of network analytics for which it requests the machine learning model; and
wherein the machine learning model training component is configured to select a machine learning model from the plurality of machine learning models which has been trained for a network side target of network analytics according to the parameter specified in the request and to provide the determined machine learning model to the network analytics component.

2. The communication network arrangement according to claim 1, wherein the network side target of network analytics is a resource of the mobile communication network or a function provided by the mobile communication network.

3. The communication network arrangement according to claim 1 or 2, wherein the network side target is a sub-network of the mobile communication network and/or an application and/or communication service provided by the mobile communication network.

4. The communication network arrangement according to any one of claim 1 to 3, wherein the network analytics component is configured to perform network analytics using the provided machine learning model.

5. The communication network arrangement according to any one of claim 1 to 4, wherein the machine learning model training component is configured to provide the selected machine learning model to the network analytics component by providing an identifier of a storage location of the machine learning model.

6. The communication network arrangement according to claim 5, wherein the machine learning model training component is configured to provide the identifier of an Analytics Data Repository Function (ADRF) as a storage location of the machine learning model.

7. The communication network arrangement according to any one of claim 1 to 6, wherein the parameter is an identification of sub-network of the mobile communication network, an identification of a type of a sub-network of the mobile communication network, or an identification of a sub-network of the mobile communication network.

8. The communication network arrangement according to claim 7, wherein the sub-network is a radio access network, a network slice, a radio access network slice, a core network slice, a non-public network or , a Public Land Mobile Network,

9. The communication network arrangement according to any one of claim 1 to 8, wherein the network analytics information is
information about the communication behaviour and/or mobility of one or more mobile terminals, when the one or more mobile terminals use the network side target of network analytics,
an observed communication quality when the one or more mobile terminals use the network side target of network analytics or
a performance of the network side target of network analytics or
a combination thereof.

10. The communication network arrangement according to any one of claims 1 to 9, comprising a intermediate component wherein the network analytics component is configured to request the machine learning model via the intermediate component and wherein the machine learning model training component is configured to provide the determined machine learning model to the network analytics component via the intermediate component.

11. The communication network arrangement according to any one of claim 1 to 10, wherein the network analytics component is an Network Data Analytics Function-Analytics Logical Function

12. The communication network arrangement according to any one of claim 1 to 11, wherein the network analytics component is configured to receive a request to perform network analytics from a control plane component of the mobile communication network specifying the parameter of the network side target of network analytics.

13. The communication network arrangement according to any one of claim 1 to 12, wherein the network analytics component specifies, in addition to the parameter of the network side target of network analytics for which it requests the machine learning model, specifies an analytics identification describing a type of network analytics information which should be generated by the requested machine learning model, or one or more mobile terminals for which the network analytics information which should be generated by the requested machine learning model or both and the machine learning model training component is configured to select the machine learning model by selecting, from the plurality of machine learning models, a machine learning model which has been trained to provide the described type of network analytics information, or has been trained for performing network analytics for the one or more mobile terminals or both.

14. The communication network arrangement according to any one of claim 1 to 13, wherein the machine learning model training component is configured to train a machine learning model for each of a plurality of values of the parameter of the network side target of network analytics.

15. A method for providing a machine learning model for performing communication network analytics comprising:
training a plurality of machine learning models for deriving network analytics information;
receiving a request for a machine learning model including the specification of a parameter of a network side target of network analytics for which the machine learning model is requested; and
providing a machine learning model from among the plurality of machine learning models which has been trained for a network side target of network analytics according to the specified parameter.
